# EUROPÄISCHE PATENTSCHRIFT

(11) **EP 1 055 825 B1**
(45) Veröffentlichungstag und Bekanntmachung des Hinweises auf die Patenterteilung: **14.04.2004**
(21) Anmeldenummer: 00109214.7
(22) Anmeldetag: 28.04.2000
(51) Int. Cl.: F04D 29/22

(54) **Zusammengesetztes Laufrad**
Assembled impeller
Rouet assemblé

(30) Priorität: 22.05.1999 DE 19923649
(43) Veröffentlichungstag der Anmeldung: 29.11.2000
(73) Patentinhaber: KSB Aktiengesellschaft, 67227 Frankenthal (DE)
(72) Erfinder: Beth, Matthias, Dr., 64347 Griesheim (DE); Pöschko, Stefan, 67259 Beindersheim (DE)

(56) Entgegenhaltungen:
- EP-A- 0 496 084
- DE-C- 368 563
- FR-A- 457 903
- GB-A- 2 260 788

## Beschreibung

Die Erfindung betrifft ein Laufrad geschlossener Bauart, welches aus mehreren Einzelteilen gefügt ist, insbesondere für Kreiselpumpen, wobei zwischen zwei Deckscheiben ein oder mehrere Schaufeln angeordnet sind, die strömungsführenden Flächen der Schaufeln seitlich abstehende Befestigungsflächen aufweisen, die Deckscheiben über den Umfang verteilt angeordnete Verbindungsstellen für die Befestigungsflächen der Schaufeln aufweisen und auf die Einzelteile einwirkende Werkzeuge das Laufrad zusammenfügen.

Für die Herstellung von zusammengesetzten Laufrädern sind verschiedene Verfahren bekannt. Bei aus Kunststoff bestehenden Laufrädern sind Konstruktionen bekannt, bei denen eine Deckscheibe mit integrierten Schaufeln ausgerüstet ist, an deren Schaufelköpfe eine schaufellose Deckscheibe befestigt wird.

Bei aus metallischen Werkstoffen bestehenden Laufrädern findet eine Vielzahl von unterschiedlichen Lösungen Verwendung. Werden mit den Laufrädern kleine Leistungen übertragen, sind die einzelnen Schaufeln häufig mit Hilfe des Buckelschweißens zwischen zwei Deckscheiben befestigt. Bei solchen kleinen Laufrädern werden Schweißelektroden an die Deckscheiben angelegt und in einem Arbeitsgang zwischen den Buckeln der Schaufeln und den Deckscheiben eine Schweißverbindung hergestellt. Hier ergibt sich jedoch das Problem der Fixierung der als Einzelteile ausgebildeten Schaufeln während des Schweißvorganges, wozu zusätzliche Hilfsmittel erforderlich sind.

Bei größeren Leistungen der Laufräder finden sogenannte Z-förmige Schaufeln Verwendung. Durch die GB-A-1 140 334 ist ein Herstellungsprinzip bekannt, bei dem alle Schaufeln Bestandteil eines einteiligen Z-förmigen Schaufelverbandes sind. Eine solche Baugruppe wird dann mit einer saug- und druckseitigen Deckscheibe verschweißt. Dem geringeren Aufwand bei der Positionierung der Schaufeln steht ein höherer Materialaufwand entgegen. Eine weitere Schwierigkeit bildet hierbei die Herstellung der Schweißverbindungen. Zu diesem Zweck müssen aus radialer Richtung in die Schaufelkanäle von außen sogenannte Schieber eingeschoben werden, die als Elektroden für einen Punktschweißvorgang dienen. Solche Schieber sind insbesondere bei kleineren Laufrädern nur sehr schwierig in den einzelnen Schaufelkanälen zu positionieren. Auch erfordert dies sehr aufwendige Schweißwerkzeuge und der Schweißvorgang selbst ist zeitaufwendig.

Aus der GB-A-1 523 972 ist eine Lösung bekannt, bei der einzelne Z-förmige Schaufeln durch Aneinanderfügen zu einem geschlossenen Laufrad zusammengesetzt werden. Im Bereich der Fügestellen werden die Einzelteile durch von außen angebrachte Schweißnähte zusammengehalten und ergeben ein zusammengesetztes Laufrad. Diese Herstellungsart erspart den Materialeinsatz für saug- und druckseitige Deckscheiben, da diese durch die aneinanderliegenden Schenkel der Z-Form gebildet werden. Die notwendigen langen Schweißnähte an den Fügestellen bedingen jedoch einen hohen Wärmeeintrag in das zu fügende Bauteil, wodurch Verzug, Verwerfungen und erhebliche Spannungen im Bauteil auftreten.

Die US-A-2 360 440 zeigt eine mehrteilige Laufradbauart, bei der mehrere einzelne Z-förmige Schaufeln zwischen zwei Deckscheiben angeordnet und damit verschweißt sind. Gegenüber einem einteiligen Z-förmigen Schaufelverband analog der Lösung nach der GB-A-1 140 334, stellt diese Lösung mit Einzelschaufeln einen geringeren Materialeinsatz dar. Die Schenkel der Z-förmigen Schaufeln bilden von der strömungsführenden Schaufelfläche seitlich abstehende Befestigungsflächen. Mit Hilfe von Punktschweißungen erfolgt eine Verbindung zwischen den Deckscheiben und den Befestigungsflächen der Schaufeln. Schweißelektroden, die durch die Austrittsöffnung des Laufrades in die Schaufelkanäle eingeführt werden, stellen die Schweißverbindungen her. Dies ist jedoch sehr zeitaufwendig und erfordert aufwendige Vorrichtungen oder langwierige manuelle Handarbeit. Bei diesem Stand der Technik erfolgt erst eine Verschweißung der Schaufeln mit nur einer Deckscheibe. Auf ein so geschaffenes Halbzeug wird die andere Deckscheibe aufgelegt und in die dadurch abgedeckten Schaufelkanäle aus radialer Richtung ein schieberförmiges Werkzeug eingeschwenkt. Dieses dient als Gegenelektrode für eine von außen heranzuführende Schweißelektrode. Häufig treten dann nach Beendigung des Schweißvorganges Schwierigkeiten bei der Entnahme des schieberförmigen Werkzeuges auf.

Und durch die DE-C-39 39 156 ist ein mehrteiliges Laufrad bekannt, welches als Verbundkonstruktion aus verschiedenen Materialien zusammengesetzt ist. Den Zusammenhalt der Teile bewirken in die beiden äußeren Deckscheiben eingeprägte, zum Laufradinnern weisende Nasen, die Hohlräume der Schaufeln durchdringen. Die aneinanderliegenden Spitzen der Nasen werden miteinander verschweißt. Eine solche Lösung ist jedoch nur auf die Verwendung von dicken Schaufeln beschränkt, innerhalb derer die Schweißverbindung erfolgt. Bei Verwendung von dünnen Schaufeln, die als Blechstreifen ausgebildet sind, würde eine Anordnung der Nasen innerhalb der Schaufelkanäle den Strömungsweg versperren. Nachteilig bei dieser Lösung ist auch, daß die Schaufeln zwischen den Deckscheiben nur eingeklemmt werden. Eine Schweißverbindung zwischen Schaufel und Deckscheibe findet bei einer solchen Ausführungsform nicht statt.

Durch die EP 0 496 084 A1 ist offenes, aus zwei zusammengeschweißten Blechformteilen bestehendes Laufrad bekannt. In der Deckscheibe sind sich entlang der Schaufelkontur erstreckende Öffnungen vorgesehen. Sie werden gebildet durch Anschneiden der Deckscheibe und anschließendes Umbiegen der entsprechend freigeschnittenen Deckscheibenteilen um 90°, wodurch gleichzeitig die Schaufeln hergestellt werden. Die Größe einer solchen Öffnung ist mit der Größe einer umgebogenen Schaufeln identisch und erstreckt sich entlang der Vorderseite der Schaufeln. Die durch das Umbiegen hergestellten Schaufeln stehen mit nur einer schmalen Längsseite stumpf auf der Nabenscheibe auf und werden durch bahngeschweißte Nähte mit der Nabenscheibe verschweißt. Dazu wird ein Schweisswerkzeug durch die bei der Bildung der Schaufeln in der Deckscheibe entstehenden Öffnungen zum Schweissort hindurchgeführt. Somit entsteht ein offenes Laufrad mit dem Nachteil eines schlechten Wirkungsgrades. Infolge der langen Schweißnähte erfolgt ein hoher Wärmeeintrag in das Laufrad, der zu unerwünschten und nachträglich auszugleichenden Verformungen führt.

Der Erfindung liegt daher das Problem zugrunde, für zusammengesetzte Laufräder, in denen Schaufeln mit seitlich angeordneten Befestigungsflächen Anwendung finden, wobei die Schaufeln als Z-förmige oder U-förmige Einzelschaufeln oder entsprechende Befestigungsflächen aufweisende Schaufelverbände ausgebildet sind, eine konstruktive Ausbildung zu entwickeln, die eine einfachere und schnellere Montage eines zusammengesetzten Laufrades ermöglicht.

Die Lösung dieses Problems sieht vor, daß eine oder mehrere Deckscheiben mit Freiräumen für den Zugang eines Fügewerkzeuges zu innerhalb des Laufrades angeordneten Verbindungsstellen versehen sind.

Mit dieser Lösung ist es möglich, in einem Arbeitsvorgang ein aus mehreren Teilen zusammengesetztes Laufrad zusammenzufügen. Mit den in den Deckscheiben angeordneten Freiräumen und/oder Durchbrüchen wird für die geschlossenen Laufräder eine verbesserte Zugänglichkeit für ein Fügewerkzeug zu den innerhalb eines Schaufelkanales liegenden Verbindungsstellen geschaffen. Zu jeder Verbindungsstelle innerhalb des Laufrades weisen die äußeren Deckscheiben einen entsprechenden Freiraum auf. Die Freiräume erlauben ein Einführen der Fügewerkzeuge durch die jeweilige Deckscheibe in den entsprechenden Schaufelkanal und damit eine einfache Anlage eines Fügewerkzeuges an einer Befestigungsfläche der mit einer Deckscheibe zu verbindenden Schaufel. Die Befestigungsfläche, die Bestandteil einer Einzelschaufel oder integrales Teil eines vorgeformten Schaufelverbandes sein kann, wird dann unter der Mitwirkung eines weiteren, von außen an der Deckscheibe anliegenden Werkzeugteiles mit der jeweiligen Deckscheibe verbunden. Somit ist die Verwendung eines einfach aufgebauten Montagewerkzeuges möglich, bei dem durch eine Zustellbewegung in Achsrichtung des Laufrades in einem Arbeitsvorgang sämtliche Verbindungsstellen der miteinander zu verbindenden Einzelteile hergestellt werden können. Beispielsweise bei einem Fügeverfahren durch Punktschweißen ist somit die einfache Heranführung von stabförmigen Schweißelektroden aus axialer Richtung zu den Schweißpunkten innerhalb eines oder mehrerer Schaufelkanäle möglich. Schenkelteile einer Z- oder U-förmigen Schaufel können damit direkt an der entsprechend anliegenden Deckscheibe befestigt werden. Dies ergibt eine erhebliche Verbesserung der Herstellung und es kann auf zusätzliche, aus radialer Richtung in die Schaufelkanäle eingeführte Schieber verzichtet werden.

Eine Ausgestaltung der Erfindung sieht vor, daß die Freiräume der einen Deckscheibe gegenüber den Freiräumen der anderen Deckscheibe versetzt angeordnet sind. Diese Maßnahme ermöglicht eine Heranführung der Fügewerkzeuge von beiden Seiten der Deckscheiben und direkt in die jeweiligen Schaufelkanäle hinein, um in einem einzigen Arbeitsgang eine gleichzeitige, beidseitige Verbindung herzustellen. Durch die wechselweise Anordnung der Freiräume wird die Zugänglichkeit zu den Verbindungsstellen erheblich verbessert. Ebenso können die Fügewerkzeuge problemlos von dem Bauteil entfernt werden.

Bei Verwendung eines einteiligen Schaufelverbandes ist es möglich, ein aus drei Hauptteilen bestehendes Laufrad in einfachster Weise in einem einzigen Arbeitsgang zu fügen. Hierbei kann es sich wie beim Schweißen um stoffschlüssige Verbindungen, oder auch um formschlüssige oder kraftschlüssige Verbindungen handeln, wie sie im Rahmen der Umform- oder Niettechnik bekannt sind. Mit Hilfe einer solchen Laufradgestaltung ist bei der Herstellung ein hoher Automatisierungsgrad möglich.

Weitere Ausgestaltungen der Erfindung sehen vor, daß die Freiräume zwischen radialen Vorsprüngen der Deckscheiben angeordnet sind oder daß die Freiräume als Kreisabschnitte und/oder Kreisausschnitte der Deckscheiben ausgebildet sind. Die Freiräume können auch eine sonstige andere Form aufweisen, die einen Durchgang eines Fügewerkzeuges durch eine Deckscheibe ermöglichen. Dies können Öffnungen, Aussparungen oder ähnliche Formen sein. Praktische Versuche haben ergeben, daß die Auswirkungen solcher Öffnungen den Wirkungsgrad eines Laufrades nicht beeinträchtigen oder in ihrer Wirkung vernachlässigbar sind.

Eine weitere vorteilhafte Ausgestaltung der Erfindung sieht vor, daß ein durch einen Laser gebildetes Fügewerkzeug den Freiraum selbst herstellt. Damit ist es möglich, das Laufrad mit allen Teilen in seine Fügeposition zu bringen. Mit Hilfe eines Laserimpulses wird in der Deckscheibe ein Freiraum geschaffen, der genügend durchlässig ist, um mit einem weiteren Laserpuls im Schaufelkanal eine Fügeverbindung zwischen einer Befestigungsfläche der Schaufeln und einer dahinterliegenden Deckscheibe zu erhalten. Auf diese Art ist auch an schwer zugänglichen Stellen innerhalb eines Laufrades in einfachster Weise selbst an den kritischsten Stellen eine sichere Verbindung zwischen den Einzelteilen herzustellen.

Bei Verwendung von Freiräumen in Form von Kreisausschnitten, Kreisabschnitten oder entsprechend anderer Formen, können diese in einfacher Weise in einem einzigen Arbeitsgang bei der Herstellung einer Deckscheibe gleich mit ausgestanzt werden. Die Freiräume können auch am Außenumfang der Deckscheiben angebracht werden. Die Form der Freiräume kann der Form eines zu verwendenden Fügemittels bzw. Fügewerkzeuges entsprechen, mit dem die Einzelteile des Laufrades zu einem einheitlichen Ganzen verbunden werden.

Ein Ausführungsbeispiel der Erfindung ist in den Zeichnungen dargestellt und wird im folgenden näher beschrieben. Es zeigen die
- Fig. 1: eine perspektivische Ansicht auf die einzelnen Teile eines Laufrades mit an den Deckscheiben angebrachten Freiräumen und die
- Fig. 2: eine Draufsicht auf ein gefügtes Laufrad.

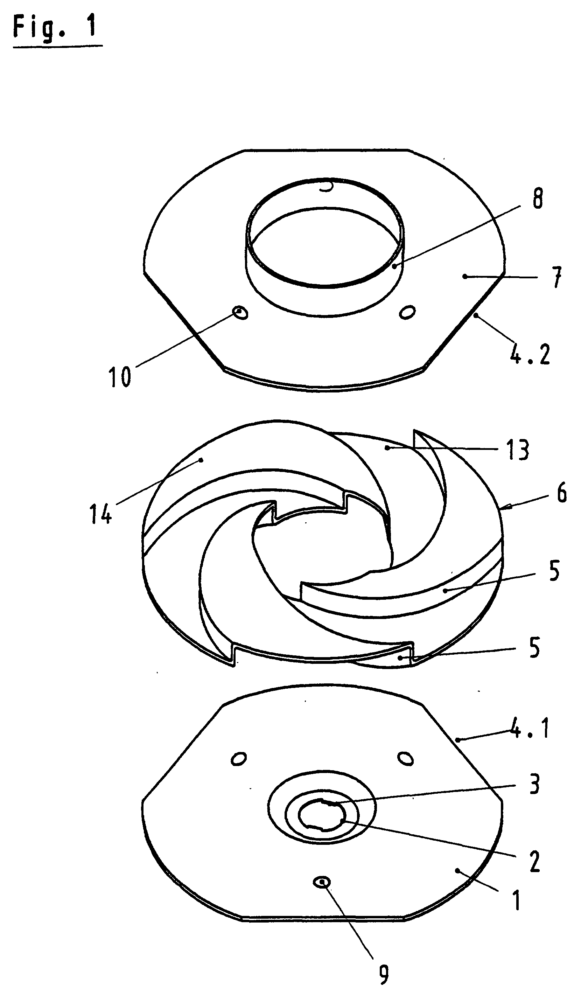

Die Fig. 1 zeigt in perspektivischer Ansicht drei Teile eines zu fügenden Laufrades. Es besteht aus einer druckseitigen Deckscheibe 1, die über eine Nabenöffnung 2 verfügt, an der drehmomentübertragende Vorsprünge 3 angeordnet sind. Diese Vorsprünge 3 sind hier direkt an die Nabenscheibe 1 angeformt, was bei Laufrädern mit kleinen zu übertragenden Leistungen möglich ist. Für größere Leistungen kann anstelle der Vorsprünge 3 ein entsprechend stärker dimensioniertes Nabenbauteil Verwendung finden. Am äußeren Umfang der Nabenscheibe 1 sind in diesem Beispiel drei Freiräume 4.1 angeordnet, die als Abflachungen dargestellt sind und einem Kreisabschnitt der hier kreisförmigen Deckscheibe 1 entsprechen.

Oberhalb der druckseitigen Deckscheibe 1 sind Schaufeln 5 dargestellt, die hier Bestandteil eines Z-förmigen Schaufelverbandes 6 ausgebildet sind. Dieser Schaufelverband 6 ist als ein einteiliges Formteil ausgebildet.

Und oberhalb des Schaufelverbandes 6 ist in Fig. 1 eine saugseitige Deckscheibe 7 eingezeichnet. In diesem Ausführungsbeispiel ist die saugseitige Deckscheibe 7 mit einem angeformten Saugmund 8 versehen, durch den ein Fördermedium in das Laufrad einströmt. Auch die saugseitige Deckscheibe 7 weist an ihrem äußeren Umfang Freiräume 4.2 auf, die hier ebenfalls als Kreisabschnitte des Außenumfanges der Deckscheibe 7 ausgebildet sind und von denen als sichtbare Kante eine Abflachung am Außenumfang der Deckscheibe 7 verbleibt. Die Anzahl der Freiräume 4.1, 4.2 wird in Abhängigkeit von der Anzahl der Verwendung findenden Schaufeln 5 gewählt. Da bei diesem Laufrad der Schaufelverband 6 insgesamt sechs angeformte Schaufeln 5 aufweist, verfügt jede Deckscheibe 1, 7 über drei Freiräume 4.1, 4.2. Entsprechend der Schaufelanzahl kann die Anzahl die Freiräume variieren. Je nach der gewünschten Festigkeitsanforderung des Laufrades sind in den Deckscheiben 1,7 weitere Freiräume 9, 10 angeordnet.

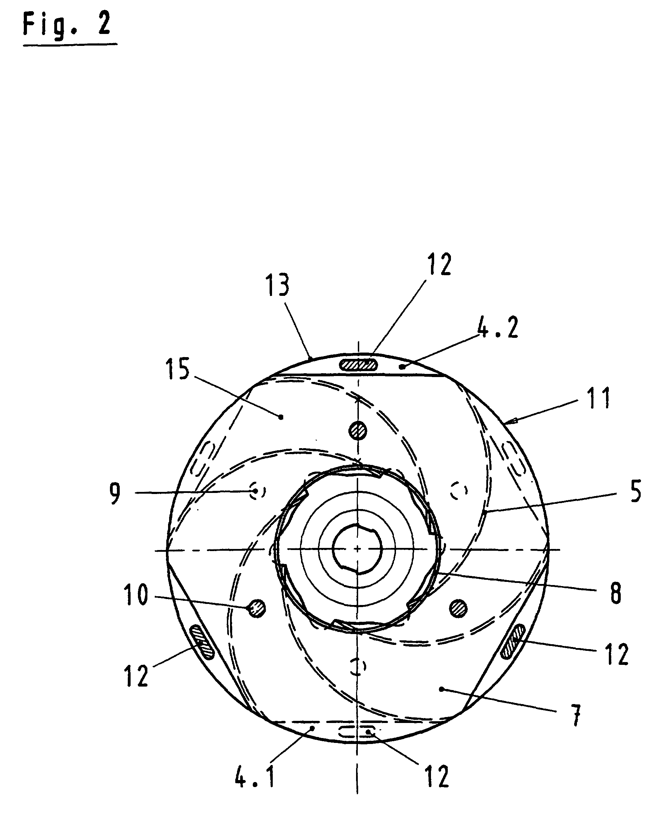

In der Fig. 2 ist eine Draufsicht auf die Saugseite eines gefügten Laufrades 11 gezeigt. Als gestrichelte Linien sind die zwischen den Deckscheiben 1, 7 befindlichen Schaufeln 5 dargestellt. Die Freiräume 4.2 der saugseitigen Deckscheibe 7 erlauben aus einer senkrecht auf der Zeichenebene stehenden Richtung eine direkte Zugänglichkeit zur Verbindungsstelle 12. Hierbei kann es sich um eine Schweißverbindung, formschlüssige Verbindung, Klebeverbindung oder sonstige, einen Zusammenhalt der Teile bewirkenden Fügetechnik handeln. Infolge der Freiräume 4.2 ist von der Saugseite her eine direkte Zugänglichkeit zur Befestigungsfläche 13 möglich, die sich zwischen zwei Schaufeln 5 des Schaufelverbandes 6 erstreckt und an der druckseitigen Deckscheibe 1 anliegt.

Die Freiräume 4.1 der druckseitigen Deckscheibe 1 sind in der Fig. 2 unterhalb der saugseitigen Deckscheibe 7 befindlich und deshalb durch eine gestrichelte Linie gezeigt. Ebenfalls gestrichelt dargestellt sind die von der druckseitigen Deckscheibe her zugänglichen Verbindungsstellen 12, die im Vergleich zu denen von der Saugseite her zugänglichen Verbindungsstellen 12 ohne Schraffur gezeigt sind.

Die Freiräume 4.1 und 4.2 können auch eine andere als die hier gezeigte Form aufweisen, welche geeignet ist, den Zugang eines Fügewerkzeuges zu den als Verbindungsstellen 12 wirkenden Fügeorten zwischen den Deckscheiben 1, 7 und den Befestigungsflächen 13, 14 der Schaufeln 5 sicherzustellen. Die Befestigungsflächen 14 der Schaufeln 5 liegen direkt an der saugseitigen Deckscheibe 7 an.

Für Laufräder mit kleinen zu übertragenden Leistungen genügt es, wenn die Verbindung zwischen den Einzelteilen ausschließlich durch die Verbindungsstellen 12 erfolgt. Soll das Laufrad größere Leistungen übertragen, dann können in den Deckscheiben weitere Freiräume 9, 10 Verwendung finden, durch die ein Fügewerkzeug in den zwischen den Schaufeln 5 ausgebildeten Schaufelkanal von außen eingeführt werden kann und dort den Fügevorgang zuläßt. Diese Freiräume 9, 10 sind in diesem Ausführungsbeispiel als kreisförmige Öffnungen dargestellt, die ein Hindurchstecken einer Schweißelektrode ermöglichen. Ebenso ist es möglich, die Freiräume 9, 10 und/oder 4.1, 4.2 durch einen Laserimpuls zu erzeugen, um mit einem nachfolgenden zweiten Impuls durch die Öffnungen hindurch in dem darunter liegenden Schaufelkanal 15 eine Fügeverbindung zu erzeugen. Auch können entsprechend der gewählten Fügetechnik die dafür jeweils notwendigen Werkzeuge eingeführt werden.

## Patentansprüche

1. Laufrad geschlossener Bauart, welches aus mehreren Einzelteilen gefügt ist, insbesondere für Kreiselpumpen, wobei zwischen zwei Deckscheiben (1, 7) ein oder mehrere Schaufeln (5) angeordnet sind, die strömungsführenden Flächen der Schaufeln (5) seitlich abstehende Befestigungsflächen (13, 14) aufweisen, die Deckscheiben (1, 7) über den Umfang verteilt angeordnete Verbindungsstellen (12) für die Befestigungsflächen (13, 14) der Schaufeln (5) aufweisen und auf die Einzelteile einwirkende Werkzeuge das Laufrad zusammenfügen, **dadurch gekennzeichnet, daß** eine oder mehrere Deckscheiben (1, 7) mit Freiräumen (4.1, 4.2, 9, 10) für den Zugang eines Fügewerkzeuges zu innerhalb des Laufrades (11) angeordneten Verbindungsstellen (12) versehen sind.

2. Laufrad nach Anspruch 1, **dadurch gekennzeichnet, daß** die Freiräume (4.1, 9) der einen Deckscheibe (1) gegenüber den Freiräumen (4.2, 10) der anderen Deckscheibe (7) versetzt angeordnet sind.

3. Laufrad nach Anspruch 1 oder 2, **dadurch gekennzeichnet, daß** die Freiräume (4.1, 4.2) zwischen radialen Vorsprüngen der Deckscheiben (1, 7) angeordnet sind.

4. Laufrad nach Anspruch 1 oder 2, **dadurch gekennzeichnet, daß** die Freiräume (4.1, 4.2) als Kreisabschnitte und/oder Kreisausschnitte der Deckscheiben (1, 7) ausgebildet sind.

5. Laufrad nach einem der Ansprüche 1 bis 4, **dadurch gekennzeichnet, daß** die Freiräume (4.1, 4.2, 9, 10) als Öffnungen, Aussparungen und/oder ähnliche Formen ausgebildet sind.

6. Laufrad nach einem der Ansprüche 1 bis 5, **dadurch gekennzeichnet, daß** die Freiräume (4.1, 4.2, 9, 10) im Bereich der Schaufelkanäle (15) angeordnet sind.

7. Laufrad nach einem der Ansprüche 1 bis 6, **dadurch gekennzeichnet, daß** ein durch einen Laser gebildetes Fügewerkzeug den Freiraum herstellt.

## Claims

1. Impeller of the closed type, which is assembled from a plurality of individual parts, in particular for centrifugal pumps, one or more blades (5) being arranged between two cover discs (1, 7), the flow-guiding surfaces of the blades (5) having laterally projecting fastening surfaces (13, 14), the cavities (1, 7) having connection points (12), arranged so as to be distributed over the circumference, for the fastening surfaces (13, 14) of the blades (5), and tools which act on the individual parts assembling the impeller, **characterized in that** one or more cavities (1, 7) are provided with free spaces (4.1, 4.2, 9, 10) for the access of an assembly tool to connection points (12) arranged within the impeller (11).

2. Impeller according to Claim 1, **characterized in that** the free spaces (4.1, 9) of one cover disc (1) are arranged so as to be offset with respect to the free spaces (4.2, 10) of the other cavities (7).

3. Impeller according to Claim 1 or 2, **characterized in that** the free spaces (4.1, 4.2) are arranged between radial projections of the cavities (1, 7).

4. Impeller according to Claim 1 or 2, **characterized in that** the free spaces (4.1, 4.2) are designed as segments of a circle and/or circular cutouts of the cavities (1, 7).

5. Impeller according to one of Claims 1 to 4, **characterized in that** the free spaces (4.1, 4.2, 9, 10) are designed as orifices, clearances and/or similar forms.

6. Impeller according to one of Claims 1 to 5, **characterized in that** the free spaces (4.1, 4.2, 9, 10) are arranged in the region of the blade channels (15).

7. Impeller according to one of Claims 1 to 6, **characterized in that** an assembly tool formed by a laser produces the free space.

## Revendications

1. Rouet de type fermé, assemblé à partir de plusieurs parties individuelles, notamment pour des pompes centrifuges, dans lequel, entre deux disques de recouvrement (1, 7) sont disposées une ou plusieurs aubes (5), les faces des aubes (5) guidant l'écoulement présentent des faces de fixation (13, 14) saillant latéralement, les disques de recouvrement (1, 7) présentent des points de connexion (12) répartis sur la périphérie pour les faces de fixation (13, 14) des aubes (5) et des outils agissant sur les pièces individuelles assemblent le rouet, **caractérisé en ce que** l'on prévoit un ou plusieurs disques de recouvrement (1, 7) avec des espaces libres (4.1, 4.2, 9, 10) pour l'accès d'un outil d'assemblage aux points de connexion (12) disposés à l'intérieur du rouet (11).

2. Rouet selon la revendication 1, **caractérisé en ce que** les espaces libres (4.1, 9) d'un disque de recouvrement (1) sont décalés par rapport aux espaces libres (4.2, 10) de l'autre disque de recouvrement (7).

3. Rouet selon la revendication 1 ou 2, **caractérisé en ce que** les espaces libres (4.1, 4.2) sont disposés entre des saillies radiales des disques de recouvrement (1, 7).

4. Rouet selon la revendication 1 ou 2, **caractérisé en ce que** les espaces libres (4.1, 4.2) sont réalisés sous forme de portions de cercle et/ou de sections de cercle des disques de recouvrement (1, 7).

5. Rouet selon l'une quelconque des revendications 1 à 4, **caractérisé en ce que** les espaces libres (4.1, 4.2, 9, 10) sont réalisés sous forme d'ouvertures, d'évidements et/ou de formes similaires.

6. Rouet selon l'une quelconque des revendications 1 à 5, **caractérisé en ce que** les espaces libres (4.1, 4.2, 9, 10) sont disposés dans la région des canaux d'aubes (15).

7. Rouet selon l'une quelconque des revendications 1 à 6, **caractérisé en ce qu'**un outil d'assemblage constitué par un laser crée l'espace libre.
